# EUROPEAN PATENT APPLICATION

(11) **EP 1 395 030 A1**
(43) Date of publication of application: **03.03.2004**
(21) Application number: 02722756.0
(22) Date of filing: 24.04.2002
(51) Int. Cl.: H04N 1/00

(54) **PORTABLE TYPE INFORMATION TERMINAL DEVICE**

(30) Priority: 27.04.2001 JP 2001132614; 27.04.2001 JP 2001132711
(71) Applicant: MATSUSHITA ELECTRIC INDUSTRIAL CO., LTD., Kadoma-shi, Osaka 571-0050 (JP)
(72) Inventor: KUBO, Tetsuya, Yokohama-shi, Kanagawa 222-0011 (JP); YAMADA, Tsuyoshi, Kawasaki-shi, Kanagawa 211-0035 (JP); ABE, Tsutomu, Kawasaki-shi, Kanagawa 211-0042 (JP); YOSHIDA, Mamoru, Yokosuka-shi, Kanagawa 239-0842 (JP)
(74) Representative: Grünecker, Kinkeldey, Stockmair & Schwanhäusser Anwaltssozietät
(86) International application number: PCT/JP2002/004094
(87) International publication number: WO 2002/089462

(57) **Abstract**

An object of the present invention is to keep an antenna in good sensitivity condition, to provide easy key board operations, and to allow display windows, key buttons and others to be disposed by making the full use of a limited space within the housings.

In the invention, a hinge part (3) includes a first hinge part (1f) as a fitted part, which is formed by cutting out one of side parts of a first housing (1), and a second hinge part (32a), (3b), which is a fitting part protruded from one of the side parts of an inner surface (2A) of a second housing (2) toward an inner surface (2A) of the first housing (1), and rotatably engages with the first hinge part (1f), wherein the first hinge part (1f) and the second hinge part (32a), (3b) are not bulged out of the inner surface of the first housing (1). With such a mechanical arrangement, when the first housing (1) is placed on a work surface and the second housing (2) is opened, the side part of the first housing (1) which is closer to the a first hinge part (1f) is raised.

## Description

### <Technical Field>

The present invention relates to an information terminal device, and more particularly, to a portable information terminal device having a function of an electronic type information processing/management device, such as an electronic notebook, or the like.

### <Background Art>

A portable telephone set is convenient and portable in that the user, while carrying it, moves to any place and uses it there. In the device, the small size is important when the portability feature is taken into consideration. Accordingly, the device is reduced in size and thickness. Various information processing/management devices, which are different from the portable telephone sets, have such similar portability that the user carrying the device moves to any place and uses it there. For example, an electronic notebook have been developed and used.

Another type of device does not have only a single function as a portable telephone set or an electronic notebook, but functions as both the portable telephone set and the electronic notebook. Such a type of device has been proposed and developed, and is capable of wirelessly sending information processed by the electronic notebook to another location. For the portable telephone set with the electronic notebook function, a portable telephone set of the open/close type is known. Such a portable telephone set is normally closed and functions as the portable telephone set, but functions as an electronic notebook when it is in an open state.

The open/close type portable telephone set having the electronic notebook function, however, suffers from at least the following disadvantages:
(1) Since antenna is located near the user's head, the characteristics of the antenna are deteriorated.
(2) When the portable telephone set is used as an electronic notebook by opening an upper housing part into which an operation function for the portable telephone set is incorporated, a lower housing part into which the electronic notebook function is incorporated is placed, usually parallel to the upper surface of a table. Accordingly, an operator must operate keys on a keyboard in a state that he peeps into a keyboard surface. It is unsatisfactory in its operationality.
(3) When the upper housing part is opened in order to use the lower housing part as an electronic notebook and the operator performs a key depression, for example, the upper housing part is easy to turn by the depressing force, and hence is shaky.
(4) When the upper housing part is opened in order to use the lower housing part as an electronic notebook, the upper housing part being opened naturally closes in certain depressing conditions.
   Further,
(5) At some locations of a strap where it is mounted on the lower housing part, the strap is a hindrance to the operation, and the lower housing part is shaky.
(6) The upper housing part and the lower housing part are coupled together by means of a hinge. In many cases, the hinge parts of the upper and lower housing parts are outwardly bulged. If so shaped, it is impossible to dispose key buttons on the surface parts corresponding to the hinge parts, and those surface parts are apt to be dead spaces.
(7) In the structure where the hinge parts are outwardly bulged, it is impossible to fully dispose a display part over the inner surface area of the housing since the hinge parts are present.
(8) Where the upper housing part is opened and the lower housing part is used as the electronic notebook, the upper housing part is easy to be scratched by the upper surface of a work table on which the portable telephone set is placed.

In the portable telephone set of the open/close type, usually, the lower housing part has substantially the same size as of the upper housing part, which may be turned for opening and closing with respect to the lower housing part with the aid of the hinge part. Accordingly, when the upper housing part and the lower housing part are closed together, the operation to open the upper housing part is difficult.

If a dent or projection is formed in or on one of the upper housing part and the lower housing part, it is easy for the operator to open them by putting his finger on the dent or projection. Usually, however, such a dent or projection is not formed in or on the upper housing part or the lower housing part. Accordingly, the operator opens the housing parts one from the other by forcibly putting his finger or nail into a gap between the housing parts at the closed part or by pinching both side parts of one of the housing parts.

In a structure in which a spring for self-closing, for example, is incorporated into the hinge section which couples the upper housing part to the lower housing part in an openable and closable fashion, even if any of the methods is used, when the upper housing part is opened, a relatively large force must be applied while resisting the self-closing force. Accordingly, the opening operation is more difficult.

In the case where the upper housing part and the lower housing part are substantially equal in size, when the user holds the terminal device in a state that both the housings are folded together, there is a chance that he mistakenly drops the terminal device to damage it, or drops it into water to possibly cause a trouble, if a handhold, e.g., the dent or protrusion, is not formed.

Accordingly, in view of the above circumstances, an object of the invention is to provide a portable information terminal device which keeps an antenna in good sensitivity condition, provides easy key board operations, and allows display windows, key buttons and others to be disposed by making the full use of a limited space within the housings.

Another object of the invention is to provide a portable information terminal device in which any person can easily open the upper housing, and the user holds the terminal device by hand while hardly dropping it.

### <Disclosure of the Invention>

First, the present invention provides a portable information terminal device wherein a first housing is coupled to a second housing in an openable and closable fashion by a hinge section, and a function operable when the housings are in an opened state or another function operable when the housings are in a closed state is selectively used. The hinge section includes a first hinge part formed by cutting out one side part of the first housing; and a second hinge part protruded from a side edge of one of the side parts of an inner surface of a second housing opposed to the first housing toward an inner surface of the first housing. The second hinge part is rotatably fit to the cutout part of the first housing in a state that the second hinge part is flush with the inner surface of the first housing.

In consequence, when the second housing is opened, the side edge part of the second housing, which is closer to the hinge section, turns around outside the outer surface of the first housing and protrudes, and the first housing inclines to the user. Accordingly, an operationality of the keyboard is improved. Further, the hinge section does not protrude on the inner surfaces of the first and second housings. This eliminates the necessity of securing a space to install the hinge section in the inner surfaces of the first and second housings. Further, display windows, key buttons and others may be disposed by making the full use of a limited space within the housings.

Second, an antenna is preferably housed in the hinge section in a state that the antenna is enabled to be put in and out of the hinge section, and that the antenna is slanted in a direction in which the antenna becomes distant from the outer surface of the first housing, and that when both of the housings are opened with the antenna being housed therein, the antenna is projected to have such a length that a tip end of the antenna does not contact an upper surface of a work surface on which the housing is placed.

In consequence, if the portable information terminal device is placed on a metal work table, for example, the antenna never comes in contact with the work table. Thus, a good sensitivity condition of the antenna is retained.

Third, a display window for displaying information may be provided on the inner surface of the second housing; moreover, a keyboard for the operation for the information processing/managing function may be provided on the inner surface of the first housing.

Fourth, the hinge section may include locking means to lock the turning operation of the second housing when the second housing is turned by a predetermined opening angle.

In consequence, when the second housing is turned by a predetermined opening angle, the second housing is locked. Thus, there is no chance that the second housing fluctuates or unnecessarily closes.

Fifth, the turning angle of the second housing may be locked when the second housing is turned by an angle within an angular range from about 90° to about 180° with respect to the first housing.

Sixth, the hinge section preferably includes self-closing means which automatically turns the second housing to close toward the first housing when the second housing is closed to a position of a predetermined angle.

In consequence, one can prevent a trouble that when the second housing is folded over the first housing, the second housing unnecessarily opens and the user mistakenly operate the switch or the like on the inner surface thereof.

Seventh, the hinge section preferably includes a coupling pin containing the locking means and the self-closing means.

This feature eliminates the necessity of providing a space exclusively used for containing the locking means and the self-closing means, thereby leading to an advantage of size reduction.

Eighth, an insertion hole for a strap is preferably formed between a side surface opposed to the side surface on the hinge section side of the first housing and one of end faces of the first housing.

This feature brings about the following advantage. When the second housing is opened and the portable information terminal device is used as an information management device, the first housing rises. Accordingly, one can prevent such an unwanted situation that when the strap is attached, a strap part is nipped between the first housing and the work table on which the first housing is placed, and the first housing fluctuates.

Ninth, an elastic member being in contact with the work surface when the second housing is opened is preferably provided on an outer surface of the second housing.

In consequence, since the elastic member comes in contact with the upper surface of a work table on which the first housing is placed, one can prevent the outer surface of the second housing from being damaged when the second housing is opened. This fact allows the user to operate the key switches by a relatively large force. Thus, there is eliminated the poor key operation by an insufficient operation force.

Tenth, according to the invention, there is provided a portable information terminal device wherein a second housing is coupled to a first housing in an openable and closable fashion, and the second housing is smaller than the first housing.

In consequence, the first housing, which is longer than the second housing, has an area which does not overlap with the second housing when those housings are folded together, viz., an area exposed to outside. The user stably holds the first housing by holding this exposed area. Further, one can easily open the second housing and prevent the erroneous dropping of the terminal device.

Eleventh, a length of at least one of vertical and horizontal sides of the second housing may be shorter than a length of corresponding vertical and horizontal sides of the first housing.

Twelfth, a first hinge part which forms one part of the hinge section may be provided on a side edge part of the long side of the first housing, and a length of the long side of the second housing on which a second hinge part forming the other part of the hinge section is provided may be shorter than a length of the long side of the first housing on which the first hinge part is provided.

Thirteenth, a mouthpiece for detecting a sound is preferably provided in an area on the inner surface of the first housing opposed to the second housing, the area being exposed to outside when the second housing is closed.

In consequence, when various electronic parts for realizing the portable telephone set function are disposed within the first housing, electrical connections become simpler than in the case where the mouthpiece is provided in the second housing.

Fourteenth, an antenna may be housed in the hinge section in a state that the antenna is enabled to be put in and out of the hinge section.

In consequence, the antenna is not exposed to the outer surface portions of the first and second housings. Accordingly, even if the first and second housings are in an opening state or a closing state, one can prevent a case that the housing unstably moves and the operations are unreliable as the result of hindrance by the antenna.

Fifteenth, It is preferable that the short side of the second housing is a vertical side and that the lower side of the second housing is lacking.

In consequence, when both the housings are folded together and the terminal device is used vertically arranged, the lower part of the first housing is exposed to outside. At the boundary between the exposed part and the second housing, a part located above the boundary is horizontally expanded. Accordingly, a stepped part is formed at the boundary. By supporting the stepped part by a finger or the like, one can effectively prevent the dropping of the terminal device.

### <Brief Description of the Drawings>

Fig. 1 is a perspective view showing a portable information terminal device according to a first embodiment of the invention when it is used as an electronic notebook;
Fig. 2(A) is a perspective view showing the portable information terminal device shown in Fig. 1 when it is used as a portable telephone set, and Fig. 2(B) is a perspective view showing of the portable information terminal device when the upper housing is in the middle of opening of the upper housing;
Fig. 3(A) is a side view showing the portable information terminal device shown in Fig. 1 when it is used as a portable telephone set, and Fig. 3B is a side view showing the portable information terminal device when it is used as an electronic notebook;
Fig. 4 is an exploded perspective view illustrating the portable information terminal device shown in Fig. 1;
Fig. 5 is a cross sectional view showing a structure of a hinge section which contains an antenna of the portable information terminal device shown in Fig. 1;
Fig. 6 is a perspective view showing a portable information terminal device according to a second embodiment of the invention when it is used as a portable telephone set.
Fig. 7 is a perspective view showing the portable information terminal device shown in Fig. 6 when it is used as an electronic notebook; and
Fig. 8 is a cross sectional view showing a structure of a hinge section which contains an antenna of the portable information terminal device shown in Fig. 6.

In the figure, reference numeral 1 is a lower housing (first housing); 1A is an inner surface; 1B is an outer surface; 1d is a cutout part; 1e is a cutout part; 1f is an insertion port; 1g is an insertion port; 11 is a keyboard; 11a is key switches; 17 is a support member; 2 is an upper housing (second housing); 2A is an inner surface; 2B is an outer surface; 21 is an LCD display window; 22 is an elastic member; 3 is a hinge section; 3A is a first hinge part (first bearing part); 31a is a ring-like bearing member; 31b is a ring-like bearing member; 3B is a second hinge (second bearing part); 32a is a protruded bearing member; 32b is a protruded bearing member; 33 is a coupling pin (self-closing means/locking means); 4 is an antenna; 41 is a guide member; 42 is a shaft body; 43 is a head part; 44 is a contacting piece; 5 is a table; 5A is an upper surface (work surface); 101 is a lower housing (first housing); 101A is an inner surface; 101B is an outer surface; 101a is a depressed part; 101c is a protruded part; 111 is a keyboard; 112 is a mouthpiece; 113 is a support member; 102 is an upper housing (second housing); 102A is an inner surface; 102B is an outer surface; 102C is a lower end surface; 121 is an LCD display window; 103 is a hinge section; 103A is a first hinge; 103B is a second hinge part; 104 is an antenna; 104A is a head part; 105 is a table; and 105A is an upper surface (working surface).

### <Best Modes for Carrying Out the Invention>

Embodiments of the present invention will be described with reference to the accompanying drawings.

### (First Embodiment)

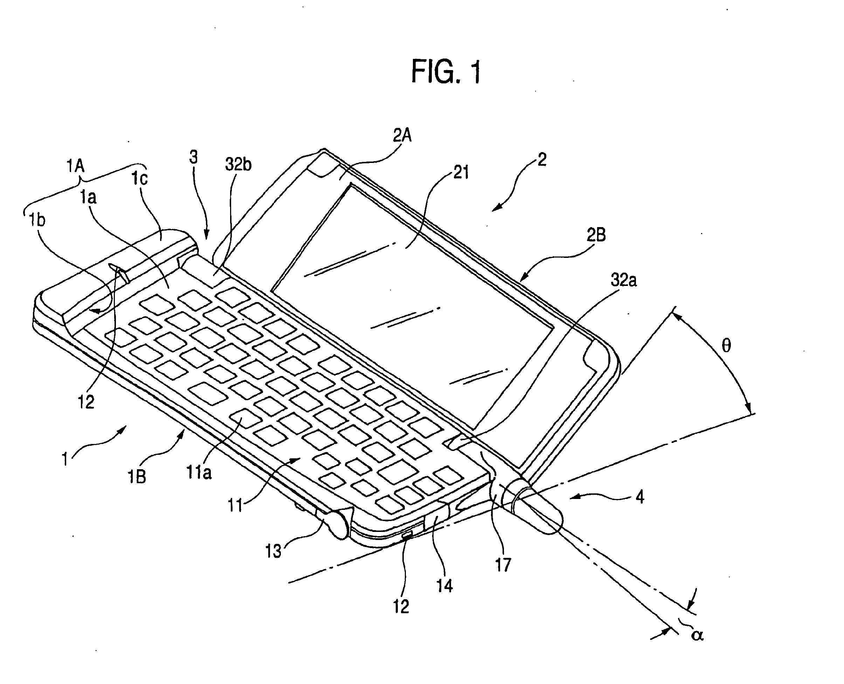

Fig. 1 is a perspective view showing a portable information terminal device according to a.first embodiment of the invention when it is opened. Description of the first embodiment will be given placing emphasis mainly on a structure of a hinge section in the portable information terminal device.

The portable information terminal device generally includes a lower housing 1 as a first housing, an upper housing 2 as a second housing, a hinge section 3 coupling together the lower housing 1 and the upper housing 2, and an antenna 4. The portable information terminal device may be switched between two functions; that is, it functions as an electronic notebook in an opened state, and it functions as a portable telephone set in a closed state.

The lower housing 1 of the embodiment is used as an electronic notebook in state that it is directed sideways such that the vertical side of the lower housing is a short side, and the horizontal side is a long side. An inner surface 1A of the lower housing is depressed to form a depressed portion 1a. A keyboard 11 having key switches 11a attached thereto, which are used for operating an electronic notebook function contained in the lower housing 1, is provided on the depressed portion 1a. A protruded part 1c is provided on the lower housing 1 together with a stepped part 1b which adjoins the depressed portion 1a of the inner surface 1A. A transmission unit 12 is provided in the protruded part 1c.

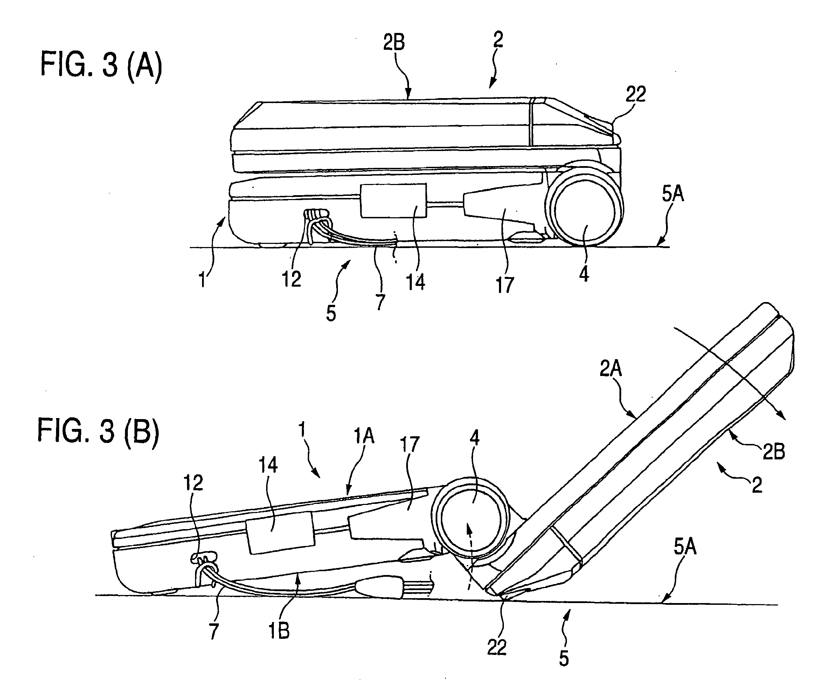

Further, an insertion port 12 for mounting a strap 7 (see Fig. 3) is opened at one end face of the lower housing 1. A communication path extends between the insertion port 12 and another insertion port (not shown) opened at an outer surface (placing surface) 1B, and a strap 7 is inserted through the communication path.

Further, a terminal cover 13 for containing an earphone terminal, a microphone terminal and others (not shown) is provided on the side surface part of the lower housing 1. A terminal cover 14 for containing external connecting terminals is provided on the same end face as that in which the insertion port 12 is formed.

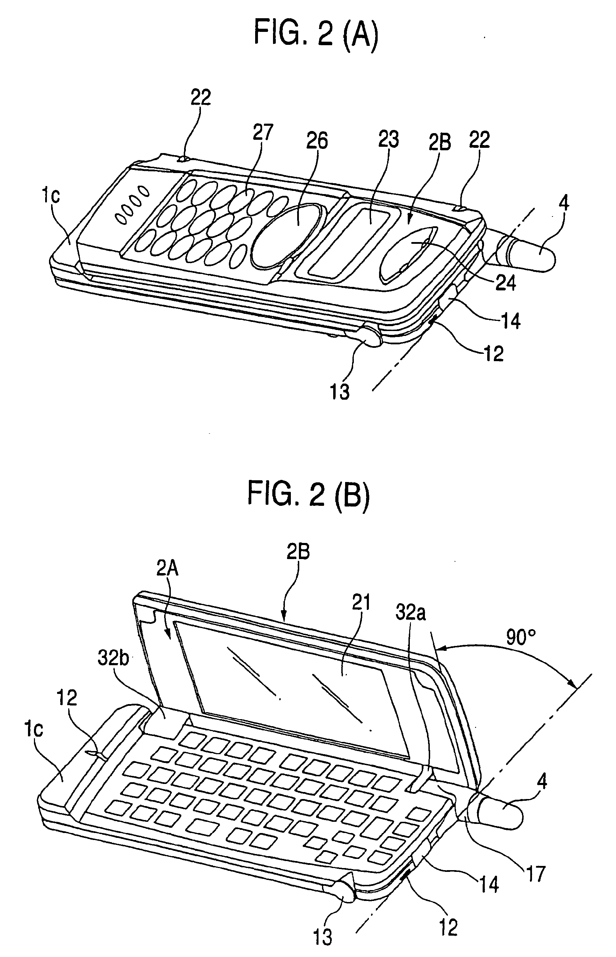

The upper housing 2 is used as a portable telephone set in a state that it is vertically directed such that the vertical side of the upper housing is a long side, and the horizontal side is a short side. An LCD window 21 for displaying information is provided in the inner surface 2A, and elastic members 22 (see Fig. 2(A)) are provided in an outer surface 2B. When the portable information terminal device is put on an upper surface 5A of a appropriate workbench, e.g., a table 5 which is stably installed, in a state that the upper housing 2 is opened, the elastic members 22 come in contact with the upper surface 5A (see Fig. 3(B)). Further, as shown in Fig. 2(A), on the outer surface 2B of the upper housing 2, there is provided an LCD window 23 and an earpiece 24 together with a multi controller 26, a dial switch 27 and so on, which are used when the portable information terminal device is used as a portable telephone set.

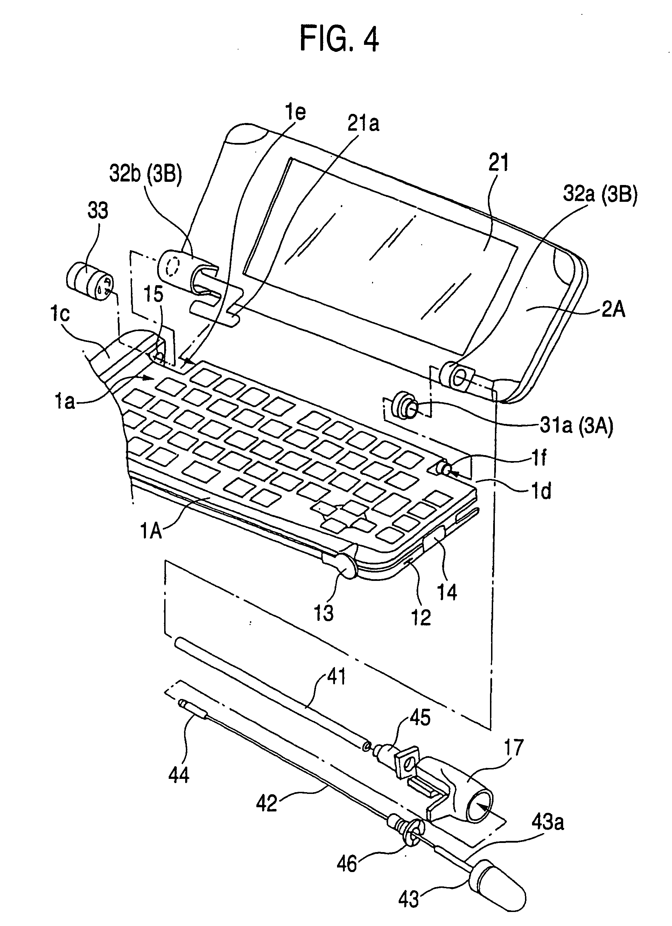

The hinge section 3, as shown in Fig. 4, couples the upper housing 2 to the lower housing 1 in an openable and closable fashion. The antenna 4 is housed in the hinge section 3 in a state that it may be put in and out of the hinge section. In particular, the hinge section 3 is shaped to be flat so that the hinge section 3 itself is not bulged out beyond the inner surface 1A of the lower housing 1. The hinge section 3 includes a first hinge part 3A as a fitted part, which is formed by cutting out one side edge part (one edge part of the long side, referred to as a side part) of the lower housing 1, and a second hinge part 3B, which is a fitting part protruded from the inner surface 2A at one side edge part (one edge part of the long side, referred to as a side part) of the upper housing 2, and rotatably engages with the first hinge part 3A.

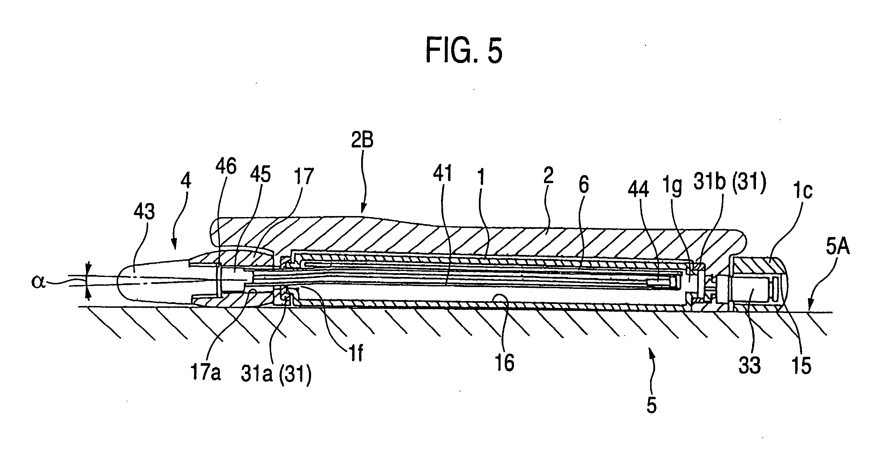

Of those hinge parts, the first hinge part 3A is composed of first bearing parts formed at two locations of the side part of the lower housing 1. That is, one of the first bearing parts is formed at a right corner of the side part of the lower housing 1, and the other of the first bearing parts is formed at a left corner of the depressed portion 1a, which is separated from a left corner part of the side part by the protruded part 1c. Specifically, the first bearing parts are constructed such that at cutout parts 1d and 1e which are provided by cutting out the right corner and the left corner of the depressed portion 1a, and the opposed wall surfaces are bored to form insertion ports 1f and 1g (for the insertion port 1g, reference is made to Fig. 5), and ring-like bearing members 31a and 31b are mounted into the insertion ports 1f and 1g, respectively.

The second hinge part 3B is composed of second bearing parts. Specifically, it is composed of a couple of protruded bearing members 32a and 32b, which are protrudedly provided at locations which are respectively opposed to the cutout parts 1d and 1e of the first bearings, on the side part of the inner surface 2A of the upper housing 2. The protruded bearing members 32a and 32b, which are protruded from the inner surface 2A of the upper housing 2, are rotatably provided at the cutout parts 1d and 1e of the lower housing 1, and inserted into the cutout parts 1d and 1e as if those bearing members fill the cutout parts, respectively. As shown in Fig. 4, a flexible substrate 21a is inserted into the protruded bearing member 32b in order to connect to a drive circuit, which is mounted on a substrate (not shown) in the lower housing 1 and controls the driving of the LCD window 21.

With such a mechanical arrangement of the hinge section 3, when the upper housing 2 is put on the upper surface 5A of the table 5 and greatly opened till it is put in a normal use state, the upper housing 2 is greatly turned to be positioned below the hinge section 3, so that the side part of the upper housing 2 of the lower housing 1 is moved up (rises).

A coupling pin 33 is mounted in the protruded bearing member 32b in connection to a through hole 15 passing through the protruded part 1c. The mounting pin 33 contains appropriate locking means (not shown) to be put in a locking state at a predetermined angle (145° in the embodiment) within an angular range from 140° to 180°. Further, it contains appropriate self-closing means (not shown) which automatically turns to close toward the lower housing 1 when the upper housing 2 is closed to a position of a predetermined angle.

The antenna 4, as shown in Fig. 3, is placed in the hinge section 3 in a put-in and -out manner. When the lower housing 1 is placed on the upper surface 5A on the table 5 and used as the electronic notebook, a putting-out direction of the antenna 4 is inclined toward the upper surface 5A of the table 5 by an angle α, but it is projected to have such a length that it does not contact the upper surface 5A of the table 5.

Accordingly, for the construction of the antenna 4, as shown in Figs. 4 and 5, a housing hole 16 is formed in the lower housing 1 and communicatively connects the insertion ports 1f and 1g. The support member 17, which is located adjacent to the protruded bearing member 32a, is attached and fit to one side edge of the lower housing 1 while being oriented in a predetermined direction. The antenna 4 includes the guide member 41 put in the housing hole 16, the shaft body 42 slidably inserted into the guide member 41 and the support member 17, the head part 43 provided at the tip of the shaft body 42, and the contacting piece 44 fixed to the base part of the shaft body 42.

As shown in Fig. 5, the guide member 41 is used for smoothly pulling out the antenna 4. In particular, in order that the pulling-out direction of the antenna 4 is slanted, by an angle α, in a direction in which the antenna increases its distance to the outer surface 1B of the lower housing 1 (when the portable information terminal device is placed on the table 5, it is slanted toward the upper surface 5A), the top end part of the antenna 4 is slanted at the same angle α. The lower housing 1 is made of conductive metallic material. The outer surface of the guide member is in contact with a circuit board 6 for the antenna, and the contacting piece 44 constantly contacts with the inner surface of the guide member. The guide member 41 electrically interconnects the circuit board 6 and the contacting piece 44. The guide member 41 also has a waterproof function for protecting the antenna 4 against rain water.

A binding metal 45 having a threaded inner surface is attached to the top end of the guide member 41, and a guide insertion member 46 for the shaft body 42 is screwed into the binding metal 45. An extended member 43a extended from the head part 43 (see Fig. 4) is slidably inserted into the guide insertion member 46. Usually, the head part 43 is fixedly put at the base end in a support hole 17a of the support member 17 (see Fig. 5).

Operation of the portable information terminal device of the instant embodiment will be described.

### [When Used as a Portable Telephone Set]

As shown Figs. 2(A), 3(A) and 3(B), when the upper housing 2 is closed, the outer surface 2B of the upper housing 2 may be used for a portable telephone set. In this case, the user holds by hand the upper housing 2 and the lower housing 1 which are folded together, and puts his ear and mouth respectively on the earpiece 24 and a mouthpiece 25, which are located on the outer surface 2B side, and is capable of wirelessly talking with the opposite party.

In this case, as shown in Fig. 5, the antenna 4 is extended in such a direction that the antenna is deviated from the outer surface 2B part to be put on the user's ear, e.g., user's head, by an angle α. Therefore, even though a vital organism part, e.g., user's head, may be located close to the antenna 4 and as a result, the antenna characteristics of the antenna 4 may be deteriorated, occurrence of such a trouble is minimized. Further, the adverse effect of electromagnetic waves on the body of the user is almost avoided.

### [When Used as an Electronic Notebook]

When the portable information terminal device, as shown in Figs. 1 and 2(B), is placed on a work table, for example, the table 5 horizontally set, and is used as an electronic notebook, the user first puts the lower housing 1 on the table 5, and fixes the lower housing 1 onto the table by one hand, and turns the closed upper housing 2 in an opening direction by the other hand.

In this case, over a predetermined angular range from the start of its opening, a self-closing force by the self-closing means of the coupling pin 33 acts. Accordingly, at the start, the user must turn the upper housing by a relatively large turning force, while resisting the self-closing force. Thereafter, when the upper housing is tuned to open to a position defined by an opening angle as shown in Fig. 2(B), the self-closing force disappears, and the upper housing is put in free state. In this state, the user can open the upper housing by a light operation force. In this way, the upper housing 2 is opened to a position defined by a given opening angle, for example, 145° in the embodiment. At this position, the turning of the upper housing 2 stops and is locked.

Further, when the upper housing 2 is further opened after it is opened, for example, at an angle of 90° during the turning of the upper housing 2, the second hinge part 3 of the upper housing 2 is turned around below the first hinge part of the lower housing 1 as shown in Fig. 3(B). In this way, since the positional relationship between the upper housing 2 and the lower housing 1 is reversed along the vertical direction, the side part of the first housing 1 provided with the first hinge part 3 is raised up. That is, the inner surface 1A of the lower housing 1 inclines to this side where the user is present (at an angle 6° to 7° in the embodiment).

Specifically, as shown in Fig. 3(B), the elastic member 22 located at the end part of the outer surface 2B of the upper housing 2 are in contact with the table 5. When the user pushes the side of the upper housing 2, which is closer to the opening, and turns clockwise, the side of the lower housing 1 closer to the hinge section 3 is raised. At this time, the elastic members 22 serve as a fulcrum of the turning of the upper housing.

Thereafter, the opening operation of the upper housing 2. is further continued, and then the upper housing is locked at the position of the angle stated above. As a result, the upper housing 2 and the lower housing 1 are stably fixed, thereby preventing vertical fluctuations of them. Accordingly, the user can stably operate the key switches 11a of the keyboard 11, which are provided on he inner surface 1A of the lower housing 1. Further, even if the user pushes the key switchella by an excessive force, there is no chance that the upper housing 2 returns to close, as a reaction, since the upper housing 2 is locked.

### (Second Embodiment)

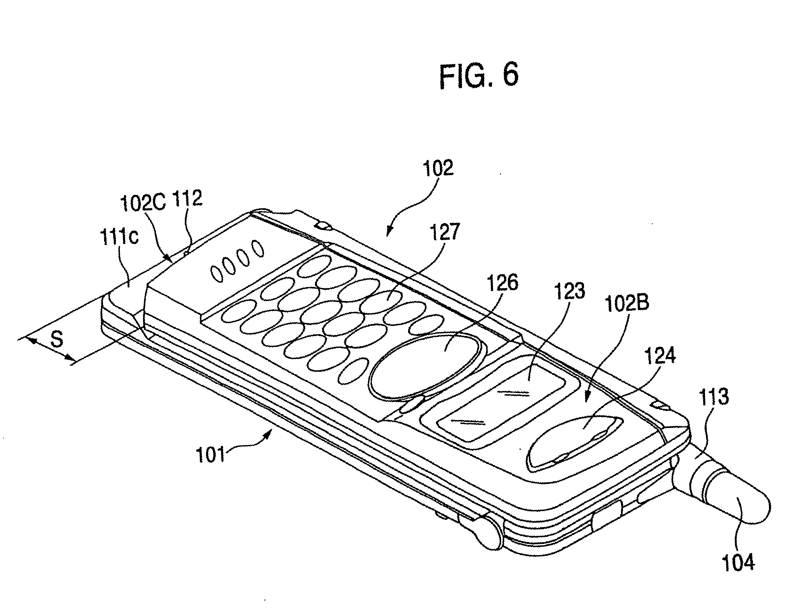

Fig. 6 is a perspective view showing a portable information terminal device according to a second embodiment of the invention when it is inan opened state. Description of the second embodiment will be given placing emphasis on dimensions of the two housings of the portable information terminal device.

The portable information terminal device generally includes a lower housing 101 as a first housing, an upper housing 102 as a second housing, a hinge section 103 coupling the lower housing 101 with the upper housing 102, and an antenna 104. The portable information terminal device may be switched between two functions; in an opened state, it functions as an electronic notebook, and in a closed state, it functions as a portable telephone set.

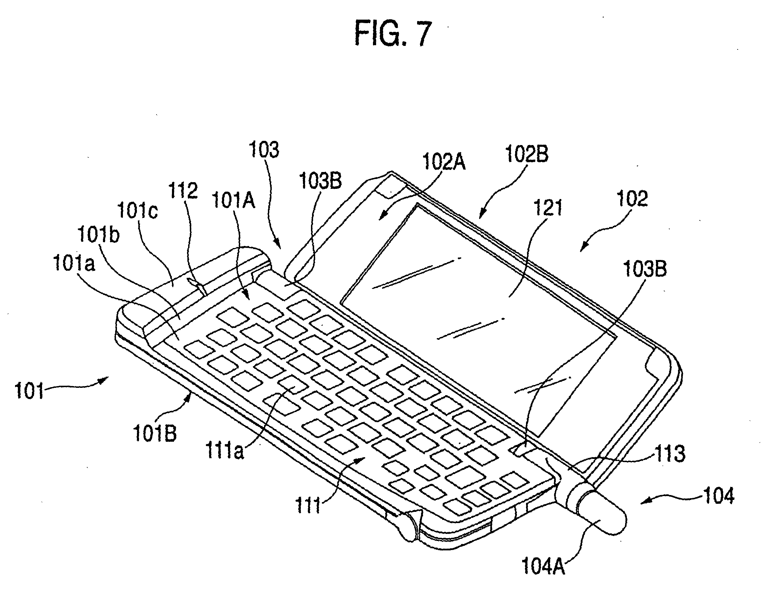

The lower housing 101 of the embodiment, as shown in Fig. 7, is used as an electronic notebook in state that it is directed sideways such that the vertical side of the lower housing is a short side, and the horizontal side is a long side. An inner surface 101A of the lower housing is depressed to form a depressed portion 101a. The upper housing 102 is put in the depressed portion 101a. In this case, the upper housing 102 is put in the depressed part in a state that an outer surface 102B of the upper housing is protruded out of the upper housing by a length S (see Fig. 6). A keyboard 111 having key switches 111a attached thereto, which are used for operating an electronic notebook function contained in the lower housing part 101 is provided on the depressed portion 101a.

A protruded part 101c is provided on the lower housing 101, with a stepped part 101b which adjoins the depressed portion 101a of the inner surface 101A. A mouthpiece 112 is provided in the protruded part 101c. The support member 113, which supports the antenna 104 while orienting it in a predetermined direction, is attached, by fitting, to a corner of the side part of the lower housing 101, which is located closer to the hinge section 103.

A microphone, for example, for detecting a voice of a speaker when talking with the opposite party is disposed on the mouthpiece 112. A transmission unit coupled to the microphone of the mouthpiece 112 is provided in the lower housing 101. The mouthpiece 112 is located at the protruded part 101c, so that it is exposed to outside even when the upper housing 102 is closed. Since the mouthpiece 112 is provided on the lower housing 101, the speaker may talk with the opposite party even in a state that the upper housing 102 is opened.

The upper housing 102, as shown in Figs. 6 and 7, is used as a portable telephone set in a state that it is vertically directed such that the vertical side of the upper housing is a long side, and the horizontal side is a short side. The vertical side (long side) part of the upper housing 102 is shorter than the vertical side (long side) of the lower housing 101 by a length S (see Fig. 6). Since a part below the vertical side part is omitted or lacking, the protruded part 101c of the lower housing 101 is always exposed to outside even when the upper housing 102 is closed.

A LCD window 121 for displaying information, e.g., processing/management information, is provided on the inner surface 102A, which is opposed to the inner surface 101A of the lower housing 101. Further, as shown in Fig. 7, the outer surface 102B includes an LCD window 123, an earpiece 124, a multi controller 126, and a dial switch 127 which are used when the portable information terminal device is used as a portable telephone set.

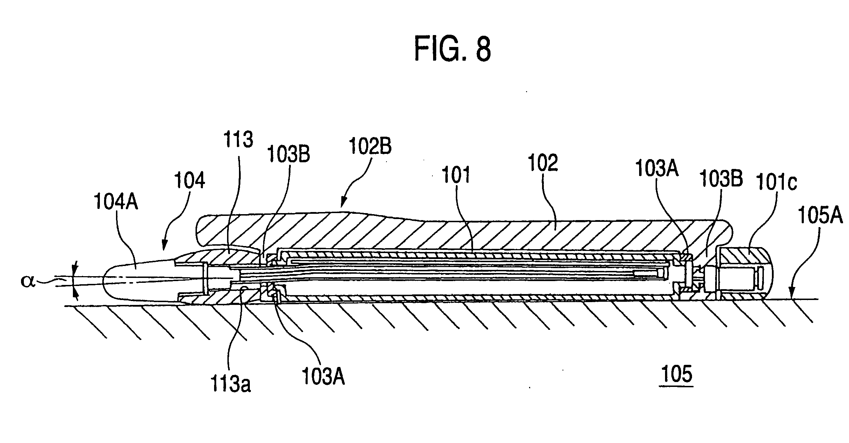

The hinge section 103, as shown in Fig. 8, couples the upper housing 102 to the lower housing 101 in an openable and closable fashion. The antenna 104 is housed in the hinge section 103 in a state that it may be put in and out of the hinge section. In particular, the hinge section 103 is shaped to be flat so that the hinge section 103 itself is not expanded out beyond the inner surface 101A of the lower housing 1. Specifically, the hinge section 103 includes a first hinge part 103A as a fitted part, which is formed by cutting out one side of the lower housing 101, and a second hinge part 103B, which is a fitting part protruded toward the inner surface 101A of the lower housing 101 on the inner surface 102A of one of the sides of the upper housing 2 corresponding to first hinge part 103A, and rotatably engages with the first hinge part 103A.

The antenna 104, as shown in Fig. 8, is placed in the hinge section 103 in a put-in and -out manner. When the lower housing 101 is placed on the upper surface 105A of the table 105 and used as the electronic notebook, the antenna 104 is inclined toward the upper surface 105A of the table 105 by an angle α. The antenna 104 is projected to have such a length that it does not contact the upper surface 105A of the table 105. Usually, a head part 104A of the antenna 104 is fixed so that a base part thereof is put in a support hole 113a of the support member 113 (see Fig. 8).

Operation of the portable information terminal device of the instant embodiment will be described.

As shown Fig. 6, when the upper housing 102 is closed, the outer surface 102B of the upper housing 102 may be used for a portable telephone set. In this case, the user uses the terminal device such that a mouthpiece 112 thereof is put on his mouth of the user, and an earpiece 124 is put on his ear. Usually, the user holds by hand the upper housing 102 and the lower housing 101 vertically arranged. Since the upper housing 102 is shorter than the lower housing by the length S, a slight step is present at a boundary between the upper housing 102 and the exposed area of the lower housing 101. Particularly, in this use state, the part above the boundary is protruded sideways.

When the portable information terminal device is vertically directed and used as the portable telephone set, the outer surface 102B of the upper housing 102 is horizontally extended beyond the protruded part 101c of the lower housing 101. Accordingly, the user holds the lower end surface 102C of the upper housing 102 (see Fig. 6) by supporting the underside thereof by his hand or finger. By so doing, the terminal device is held in a state that the lower end surface 102C is caught by the hand or finger. Accordingly, such a trouble is prevented that the user mistakenly drops the portable information terminal device and the terminal device is damaged.

Further, the antenna 104 is disposed slanted in a direction in which it becomes distant from the outer surface 101B of the lower housing 101. Therefore, occurrence of a trouble that a vital organism part, e.g., user's head, is located close to the antenna 104 and as a result, the antenna characteristics of the antenna 104 is deteriorated, is minimized. Further, the adverse effect of electromagnetic waves on the body of the user is avoided.

When the terminal device is used as an electronic notebook, for example, the lower housing 101 is placed on the table 105 horizontally set, as shown in Fig. 7. Then the user fixes the exposed protruded part 101c of the lower housing 101 by one hand, holds both side parts of the upper housing 102, i.e., the side part of the hinge section 104 side and the side part opposite thereto, by the other hand, and turns the upper housing 102 in the opening direction.

In this way, the upper housing 102 is easily opened. When a self-closing force by the self-closing means (not shown) acts over a predetermined angular range from the start of its opening, the user must turn the upper housing by a relatively large turning force, while resisting the self-closing force. Thereafter, when the upper housing is tuned to open to a position defined by a given opening angle, the self-closing force disappears, and the upper housing is put in free state. In this state, the user can open the upper housing by a light operation force.

A lateral-opening type housing is employed in this embodiment. If required, a vertical-opening type housing may be employed instead.

While the invention has been described in detail and using specific embodiments, it will be apparent to those skilled in the art that various changes and variations may be made without departing from the spirit or scope of the invention.

This application is based on the Japanese patent application filed on April 27, 2001 (Patent Application No. 2001-132614) and the Japanese patent application filed on April 27, 2001 (Patent Application No. 2001-132711), the contents of which are incorporated herein by reference.

### <Industrial Applicability>

According to the present invention, the hinge section includes a first hinge part formed by cutting out one of side parts of the first housing, and a second hinge part which is protruded from a side edge of one of the side parts of an inner surface of a second housing opposed to the first housing toward an inner surface of the first housing, wherein the second hinge part is rotatably fit to the cutout part of the first housing in a state that the second hinge part is flush with the inner surface of the first housing. When the first housing is placed on the work table, and the second housing is opened till it is put in a use state, the first housing is raised. Accordingly, it inclines to the face of the user. The operationality is improved when the terminal device is used with opening the second housing.

According to the present invention, the hinge section is not protruded from the inner surface of the first housing. In other words, the inner surface portion of the first housing may be formed flat. Accordingly, since no dead space is formed in the inner surface portion, the inner surface having a limited space may fully be utilized. This feature is convenient particularly for the small portable information terminal device designed giving the high priority to the portability.

Further, the antenna is housed in the hinge section in a state that the antenna may be put in and out of the hinge section, and the antenna is slanted toward the work surface on which the portable information terminal device is placed. The antenna is housed in the hinge section with such a length that a tip end of the antenna does not contact the work surface. In other words, the antenna is housed avoiding its contact with the work table. Accordingly, even when the portable information terminal device is put on the work table made of magnetic material, e.g., iron, good sensitivity condition of the antenna is retained. Thus, a highly reliable terminal device is provided.

Further, the invention provides a portable information terminal device wherein a second housing is coupled to a first housing in an openable and closable fashion, and the second housing is smaller than the first housing. Accordingly, when the first and second housings are folded together, an area which does not overlap with the second housing, viz., an area exposed to outside, is stepped down to thereby form a stepped part as closed. As a result, the user may firmly hold only the first housing simply and reliably by the hand with the stepped part at the boundary between the exposed area and the second housing as a handhold. Thus, he or she easily opens the housing.

In particular when the terminal device is used vertically arranged, when an upper part of the stepped part is protruded, the user prevents the terminal device from dropping by supporting the stepped part by his hand or finger. Thus, a higher safety in use is secured.

## Claims

1. A portable information terminal device wherein a first housing is coupled to a second housing in an openable and closable fashion by a hinge section, and a function operable when the housings are in an opened state or another function operable when the housings are in a closed state is selectively used,
wherein the hinge section includes:
a first hinge part formed by cutting out one of side parts of the first housing; and
a second hinge part protruded from a side edge of one of the side parts of an inner surface of a second housing opposed to the first housing toward an inner surface of the first housing, and
wherein the second hinge part is rotatably fit to the cutout part of the first housing in a state that the second hinge part is flush with the inner surface of the first housing.

2. The portable information terminal device according to claim 1, wherein:
an antenna is housed in the hinge section in a state that the antenna is enabled to be put in and out of the hinge section, and
the antenna is slanted in a direction in which the antenna becomes distant from the outer surface of the first housing, and
when both of the housings are opened with the antenna being housed therein, the antenna is projected to have such a length that a tip end of the antenna does not contact an upper surface of a work surface on which the housing is placed.

3. The portable information terminal device according to claim 1, wherein a display window for displaying information is provided on the inner surface of the second housing, and a keyboard is provided on the inner surface of the first housing.

4. The portable information terminal device according to claim 1, wherein the hinge section includes locking means to lock the turning operation of the second housing when the second housing is turned to a position defined by a predetermined angle.

5. The portable information terminal device according to claim 4, wherein the turning angle of the second housing is locked when the second housing is turned by an angle within an angular range from about 90° to about 180° with respect to the first housing.

6. The portable information terminal device according to claim 1, wherein the hinge section includes self-closing means which automatically turns the second housing to close toward the first housing when the second housing is closed to a position of a predetermined angle.

7. The portable information terminal device according to claim 4 or 6, wherein the hinge section includes a coupling pin containing the locking means and the self-closing means.

8. The portable information terminal device according to any of claims 1, 3 and 6, wherein an insertion hole for a strap is formed between a side surface opposed to the side surface on the hinge section side of the first housing and one of end faces of the first housing.

9. The portable information terminal device according to any of claims 1, 3 to 6, wherein an elastic member being in contact with the work surface when the second housing is opened is provided on an outer surface of the second housing.

10. A portable information terminal device wherein a second housing is coupled to a first housing in an openable and closable fashion,
wherein the second housing is smaller than the first housing.

11. The portable information terminal device according to claim 10, wherein a length of at least one of vertical and horizontal sides of the second housing is shorter than a length of corresponding vertical and horizontal sides of the first housing.

12. The portable information terminal device according to claim 10 or 11, wherein:
a first hinge part which forms one part of the hinge section is provided on a side edge part of the long side of the first housing, and
a length of the long side of the second housing on which a second hinge part forming the other part of the hinge section is provided is shorter than a length of the long side of the first housing on which the first hinge part is provided.

13. The portable information terminal device according to any of claims 10 to 12, wherein a mouthpiece for detecting a sound is provided in an area on the inner surface of the first housing opposed to the second housing, the area being exposed to outside when the second housing is closed.

14. The portable information terminal device according to any of claims 10 to 12, wherein an antenna is housed in the hinge section in a state that the antenna is enabled to be put in and out of the hinge section.

15. The portable information terminal device according to any of claims 10 to 14, wherein the short side of the second housing is a vertical side, and the lower side of the second housing is lacking.
